(19)

Europäisches
Patentamt

European
Patent Office

Office européen
des brevets

(11)  **EP 3 958 214 A1**

(12)  **EUROPEAN PATENT APPLICATION**

(43) Date of publication:
**23.02.2022  Bulletin 2022/08**

(21) Application number: **21202258.6**

(22) Date of filing: **26.02.2014**

(51) International Patent Classification (IPC):
***G06T 7/55*** *(2017.01)*

(52) Cooperative Patent Classification (CPC):
**G06T 7/55;** G06T 2207/10016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**19164909.4 / 3 550 513**
**14156863.4 / 2 913 796**

(71) Applicant: **NavVis GmbH**
**80636 München (DE)**

(72) Inventor: **Reinshagen, Felix**
**80636 Munich (DE)**

(74) Representative: **Rummler, Felix**
**Maucher Jenkins**
**Liebigstrasse 39**
**80538 München (DE)**

Remarks:
This application was filed on 12.10.2021 as a
divisional application to the application mentioned
under INID code 62.

(54)  **METHOD OF GENERATING PANORAMA VIEWS ON A MOBILE MAPPING SYSTEM**

(57)  The ability to precisely and thoroughly map, measure and survey indoor environments has become a major requirement for a variety of applications in industries like civil engineering, architecture, security, movie productions, asset management, and many more. Most of these applications do not only expect precise information about the 3D geometry of the mapped environment but also require high resolution imagery. To this end, state-of-the-art mobile mapping system are equipped with 360 degree panoramic cameras. These mapping systems, however, are typically operated by a person, which consequently occludes part of the field of view of the panoramic camera. A novel design of a panoramic camera rig is proposed consisting of multiple individual cameras, arranged in a way such that the operator is hidden in the blind angle of the individual cameras. The resulting parallax effect is corrected by exploiting information about the 3D geometry of the surrounding environment.

FIG. 9

**(Cont. next page)**

FIG. 10

**Description**

BACKGROUND

The ability to precisely and thoroughly map, measure and survey indoor environments is key for a variety of applications in industries like civil engineering, architecture, security, movie productions, asset management, and many more. Applications include specified/asbuilt comparisons with respect to the CAD data for newly built buildings. Changes with respect to the construction plan can be easily detected and corrected. Building information models can be generated based on the mapping data, which allows for an efficient planning and designing of modifications to that building. This could include the integration of a new pipe system at a factory site or the remodeling of office spaces.

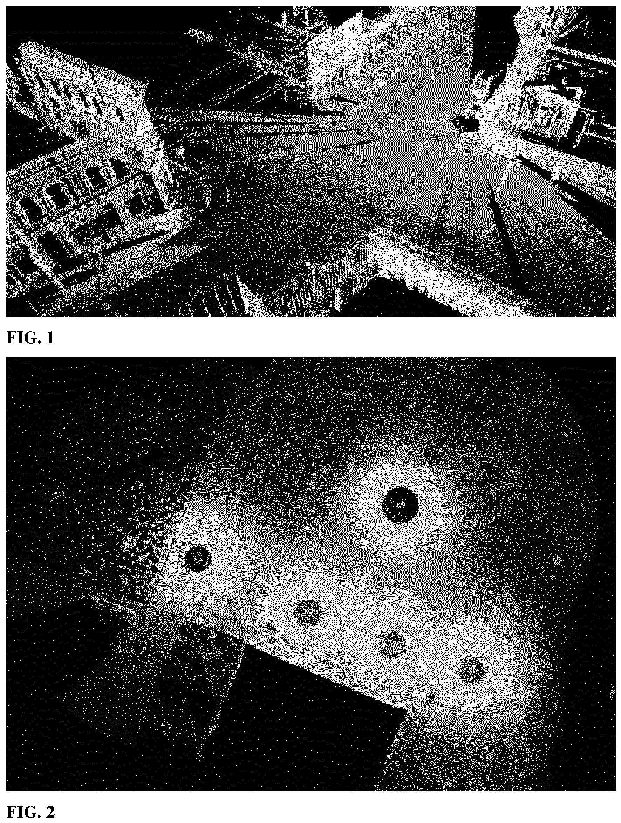

Leica Geosystems has mapped parts of an oil platform using their high-definition surveying scanners (HDS) to detect and measure deformations in the construction. The mapping was performed by using the Leica HDS6000 scanner, which precisely measures the distance and bearing of surrounding objects with respect to a single reference point. Due to the rotating scanner head, distance measurements are performed along 360 degrees in horizontal and vertical direction. These static scanners, however, can only provide distance measurements along the line of sight of a single scanning position. As shown in Figure 1 (copyright Leica Geosystems - HDS) that illustrates the distance measurements by the observed three-dimensional points (a so called point cloud), parts of a scene that are occluded by other objects cannot be measured by a single scan. Typically, multiple stationary scans are performed to resolve these occlusions as illustrated in Figure 2 (copyright http://www.laserscanningeurope.com/), which shows the top view of a point cloud generated by four stationary scans. The observed three-dimensional points of the individual scans are stitched to obtain a single point cloud. Nevertheless, even with multiple stationary scans, significant occlusions will still occur and it requires a complex planning of scanning locations to avoid these effects. These shadowing effects are especially severe in indoor environments with narrow hallways.

With a single stationary scan requiring minutes to hours to complete plus the required effort to subsequently combine the individual scans into a single point cloud, the generation of a complete point cloud of the interiors of a building is very time consuming.

In modern movie productions 3D models of recorded scenes are essential to integrate special visual effects. These models can be automatically generated based on detailed and complete mapping data of the scene. As in the previous example, multiple stationary scans are performed to fully map a scene without occlusions. Since the time and planning involved to obtain the point clouds is tremendous, this technique can only be applied in high budget productions.

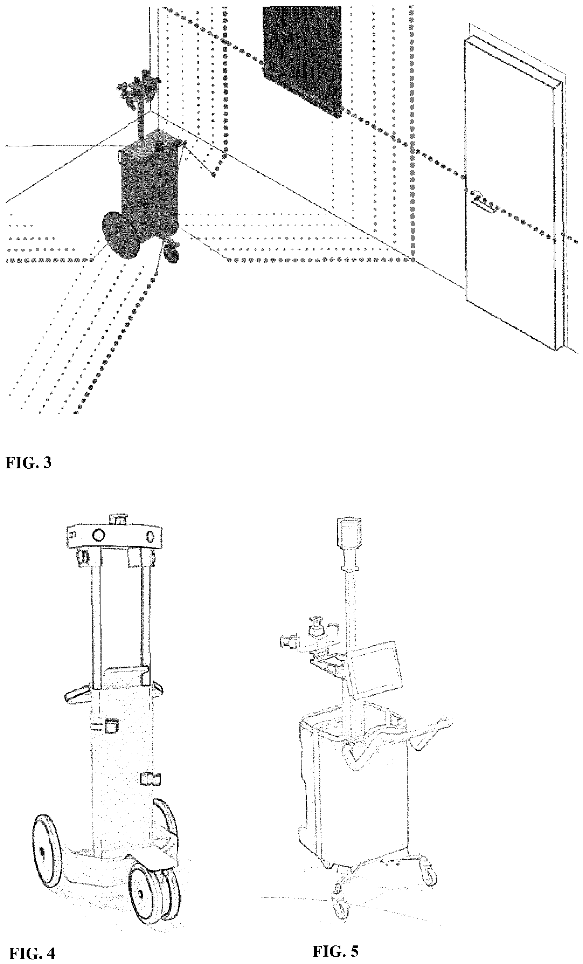

Due to these shortcomings of stationary distance and bearing scanners, a new class of mapping devices have recently emerged that are specifically designed to map indoor environments. These so called mobile mapping systems employ multiple (typically two) laser scanners that continuously scan their vicinity along multiple vertical planes as illustrated in Figure 3 by the green and blue dotted lines. While moving these mobile mapping systems along, e.g., a hallway, the individual planar scans are aggregated and merged to a single point cloud using information about the relative scanning positions. This information about the relative scanning positions can be obtained by using, e.g., a wheel odometry (GPS is hardly available indoors). A more precise position estimate can be obtained by an additional laser scanner that observes its environment along a horizontal plane (illustrated by the red dotted line in Figure 3). So called simultaneous localization and mapping (SLAM) algorithms allow for almost drift free positioning in large scale environments.

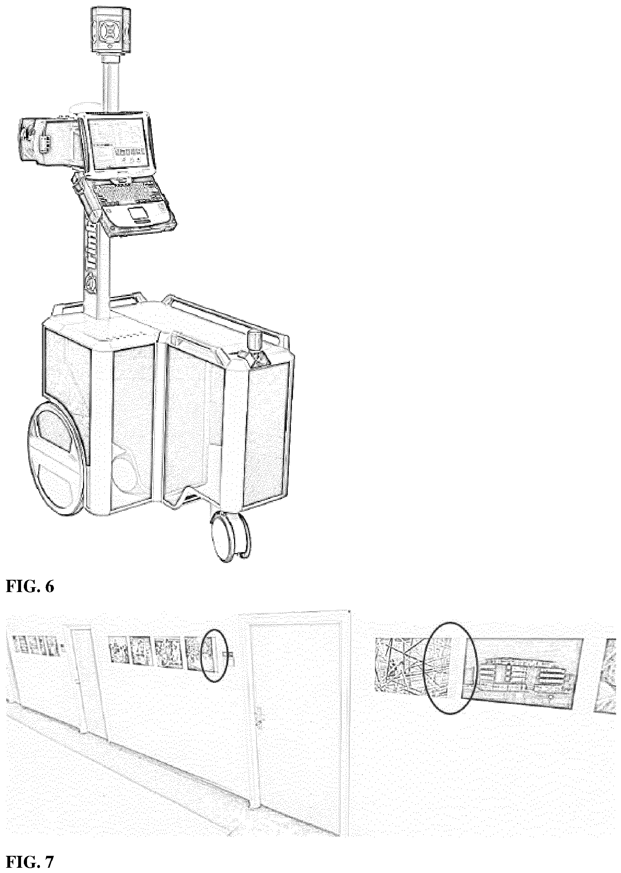

The advantage of these mobile mapping systems is the possibility of observing and mapping a scene while moving the system. Due to the resulting multiple viewpoints, occlusions can be avoided. Examples of these mobile mapping systems include the NavVis M3 Mapping Trolley (Figure 4), the Viametris IMMS (Figure 5, copyright Viametris), and the Trimble TIMMS (Figure 6, copyright Trimble). However, not only distance and bearing measurements are required in today's mapping applications. Additional visual information, typically in the form of panoramic images, is crucial to texturize 3D models in, e.g., movie productions, to allow for exact specified/asbuilt comparisons, to provide a more intuitive and detailed context in asset management, architecture, civil engineering, and many more applications like Google Streetview for indoors. 3D laser scanners like the above mentioned Leica HDS scanners already generate a colored point cloud, i.e., every distance and bearing scan also involves measuring the color and brightness of a 3D point, yet at low quality. The more advanced mobile mapping systems typically employ panoramic cameras that provide high resolution and high quality imagery. Both Trimble TIMMS as well as Viametris IMMS mapping systems employ a panoramic camera developed by Point Grey Inc. consisting of six wide angle (fisheye) cameras. The six images are superimposed according to their relative orientation to obtain a full 360 degree panorama. Further, the six cameras are mounted as close as possible to make sure the principal points of the cameras are as close as possible to each other. This is essential to avoid or reduce the parallax problem, which becomes visible when superimposing the images to a panorama as shown by the marked regions in Figure 7. In the shown panorama section the individual images are blended to reduce the visibility of these parallax artifacts.

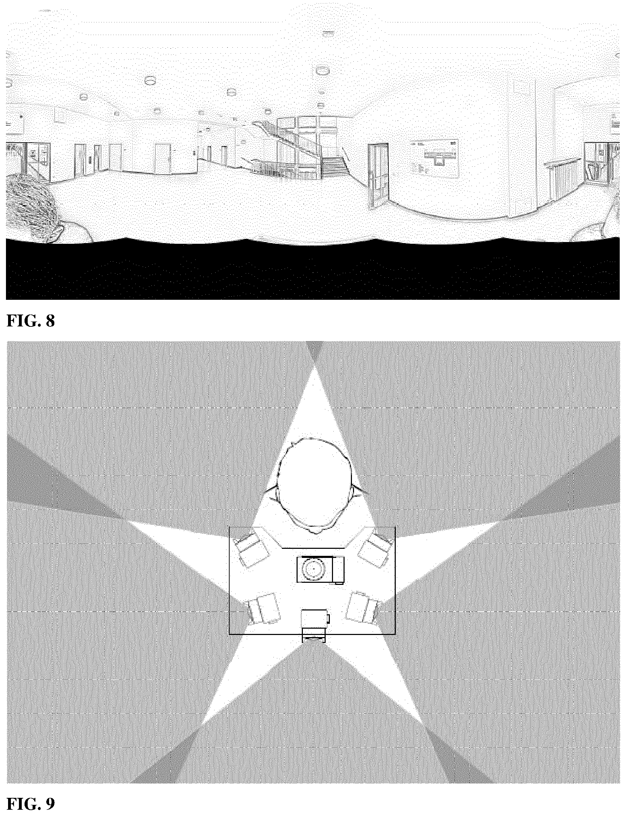

As the mobile mapping systems are typically operated by a person, it can be hardly avoided that parts of the operator are visible in the panoramic image. Due to the limitations of the overall height of the mapping system, the panoramic camera is typically mounted in a height of approximately 150 - 200 cm. Even when asking the operator to crouch every time images are taken, at least his/her head will be visible as shown in Figure 8. Clearly, crouching or even asking the operator to completely move out of the field of view of the mapping system drastically slows down the mapping process.

BRIEF DESCRIPTION OF THE DRAWINGS

Fig. 1 is an illustration of the distance measurements generated by a static 360-degree laser scanner (copyright Leica Geosystems - HDS). As shown, areas of the scene that are occluded by other objects cannot be measured from a single scanning position;
Fig. 2 illustrates a top view of a point cloud generated by four stationary laser scans;
Fig. 3 illustrates a typical assembly of three laser scanners on a mobile mapping system. The dotted lines correspond to the 3D point measurements performed by the laser scanners;
Fig. 4 is an illustration of a NavVis M3 Mobile Mapping System;
Fig. 5 is an illustration of a Viametris Mobile Mapping System;
Fig. 6 is an illustration of a Trimble Mobile Mapping System;
Fig. 7 is an illustration of an image of an indoor environment including two circled areas showing the parallax effect when superimposing images recorded from different positions to a panoramic view;
Fig. 8 is a panoramic view recorded by a standard panorama camera with the mobile mapping system including the operator in the field of view (shown on the bottom far left and right sides of the image);
Fig. 9 is an illustration of an assembly of six cameras to record panoramic images without the operator of the mobile mapping device being visible according to an exemplary preferred implementation of the present invention. The two cameras, which comprise fields of view (shown by the shaded grey areas) in the direction of the operator, are arranged to form a blind spot for accommodating the operator.
Fig. 10 is a three-dimensional illustration of the assembly of Fig. 9;
Fig. 11 is a top view of the three-dimensional illustration of Fig. 10;
Fig. 12 is a diagram illustrating the relationship of the reference images and the panoramic view in the image-based rendering process.

SUMMARY OF THE INVENTION

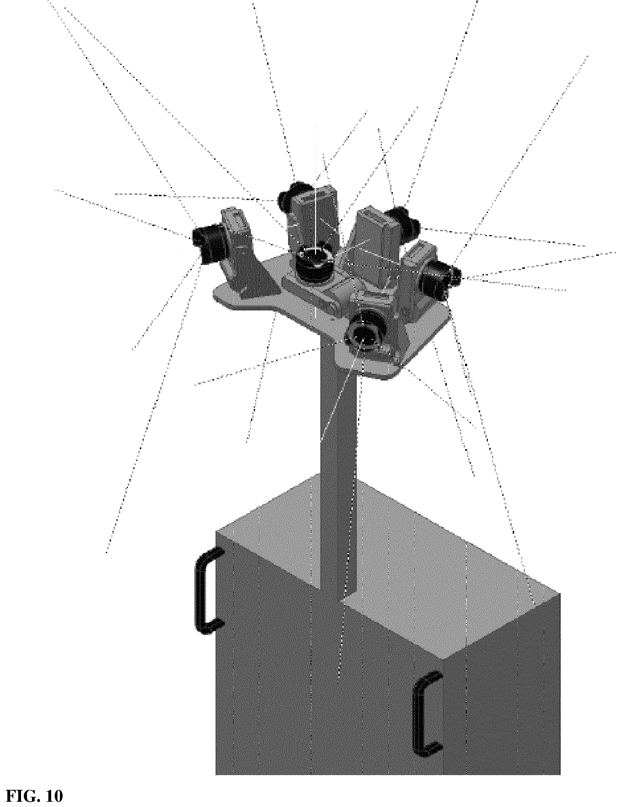

The present invention resides in a novel approach that enables continuous and accurate generation of complete 360-degree panoramic imagery without the operator being visible. To this end, a plurality of cameras are mounted in a close proximity to one another, wherein two of the plurality of cameras comprise fields of view in the direction of the operator of the mobile mapping device and are arranged to form a blind spot for accommodating the operator. This camera setup of an exemplary preferred implementation of the present invention is illustrated in Figures 9, 10, and 11 for a system consisting of six cameras.
By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. In fact, the parallax effect can also be removed when knowledge about the surrounding 3D geometry is available. Using so-called image based rendering approaches, the individual recorded images are projected onto the 3D geometry and back projected into the panoramic image sphere. The required information on the 3D geometry is actually available when combining this camera setup with our above described mapping system.
Firstly, as described above and illustrated in Figure 3, the attached laser scanners sample the surroundings to generate a 3D point cloud (explicit geometry). Second, information about the 3D geometry can be obtained via correspondences identified among the captured images (implicit geometry). These two techniques will be described in more detail in the context of the invention below.
By determining corresponding pixels among images recorded by the mobile mapping system, the depth of the pixels can be determined via triangulation. The identification of corresponding pixels, however, can be a difficult task in feature poor indoor environments like hospitals.
According to the present invention, panorama images of an environment are generated using a mobile mapping device comprising at least two cameras mounted in close proximity to one another on the device. Two of the cameras are facing the direction of the operator of the mobile mapping device and thus comprise fields of view in the direction of the operator. These two cameras and are arranged to form a blind spot for accommodating the operator. The images taken by each camera to form the panorama image may be taken simultaneously or consecutively. All images are preferably location-tagged and stored in a database. After the images of the environment have been generated by the cameras, they are processed using 3D geometry data associated with the environment to adjust parallax error in the images. By performing mobile mapping in this fashion, the present invention enables continuous and accurate generation of complete 360-degree panoramic imagery without the operator in the field of view.

In three preferred embodiments of the present invention, the environment being mapped by the mobile mapping device is an indoor environment, for example the inside of a building and/or the mobile mapping device is manually operated, for example is a movable trolley. According to these embodiments, the technique of mapping an environment with a manually operated mapping device is especially suited to the mapping of indoor environments.

In a further embodiment of the present invention which may optionally be combined with any of the aforementioned embodiments, the mobile mapping device specifically comprises more than two cameras and the blind spot is formed by arranging the two cameras comprising fields of view in the direction of the operator at a greater distance from one another than the other cameras of the plurality of cameras. By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. However, the parallax effect is removed when by use of the surrounding 3D geometry according to the present invention.

In a further embodiment of the invention that may optionally be combined with any of the aforementioned embodiments, the mobile mapping device comprises more than two cameras and the blind spot is formed by rotating the cameras to increase the distance between the point of overlap of the fields of view and the mapping device. By rotating either or both of the cameras facing the in the direction of the operator in opposite directions from one another i.e. in a direction away from the operator, the blind spot extends in a direction away from the vicinity of the mobile mapping device until the two respective fields of view intersect, thus providing more area to accommodate the operator if necessary. According to this embodiment, the need to space the two cameras facing in the direction of the operator further apart from one another may be obviated. This thereby reduces the level of parallax error in the panoramic image whilst also providing more space in the blind spot to hide the operator. However, it should be noted that a certain amount of image data in the area directly behind the operator that would otherwise be generated, may be lost due to this technique in comparison to spacing the two cameras further apart.

According to a further embodiment of the invention, that may also be optionally combined with any one of the above embodiments, the 3D geometry data used to is generated by determining corresponding pixels of the images generated by at least one of the cameras. This embodiment effectively applies the second implicit geometry approach as described above. Advantageously, it is the correspondences among any set of the generated images which enable data regarding the 3D geometry of the environment to be obtained in order to adjust the parallax error in the currently generated images. Due to the images taken by each camera used to generate the 3D geometry data having been taken simultaneously or consecutively, the 3D geometry data may be generated from the entire database of recorded images i.e. those images taken simultaneously by more than one camera and/or consecutively by at least one camera which may be the same or a different camera. Since all images are registered to one another dependent on location, the pixel correspondences between all the images in the database may conveniently be converted into 3D coordinates and points. The larger selection of images used to determine the pixel correspondences thereby improves the accuracy of the resulting 3D geometry data and hence improves the parallax error correction based thereupon.

According to yet another embodiment of the invention which may optionally be combined with any of the above embodiments, the 3D geometry data is generated by using at least one scanning means to scan the environment along multiple planes. This is effectively the first explicit geometry technique referred to above. The preferred embodiment uses a plurality of laser scanners as illustrated in Figure 3, which improves accuracy of the parallax error adjustment due to more 3D geometry data being available, and it effectively being real-time information. The multiple planes may include 360 degree horizontal and/or 360 degree vertical directions. However it should be noted that either a single, or multiple laser scanners may be used. The skilled person will also appreciated that equivalent scanning means exist such as Microsoft Kinect, light-field cameras, or time of flight cameras which also provide a suitable means for recording the 3D geometry of an environment directly.

According to a further preferred embodiment, the step of generating the panorama images is conducted continuously. This enables facilitated continuous generation of 360 degree panoramic imagery without the operator in the field of view, thereby advantageously reducing the amount of time needed to map a given environment.

EXAMPLE OF PREFERRED IMPLEMENTATION

In an example of a preferred implementation of the present invention, a mobile mapping device comprising any of the camera rigs mounted on the trolleys in Figures 3 to 6 is used to generate panorama images of the environment by wheeling the trolley down the corridors of a building. In this example, the trolley is equipped with multiple laser scanners and multiple cameras. It will be appreciated by the skilled person that the multiple cameras and laser scanners may be in the form of a rig or plurality of that rigs that is/are mountable on the trolley, but may also be provided as integral features of the trolley.

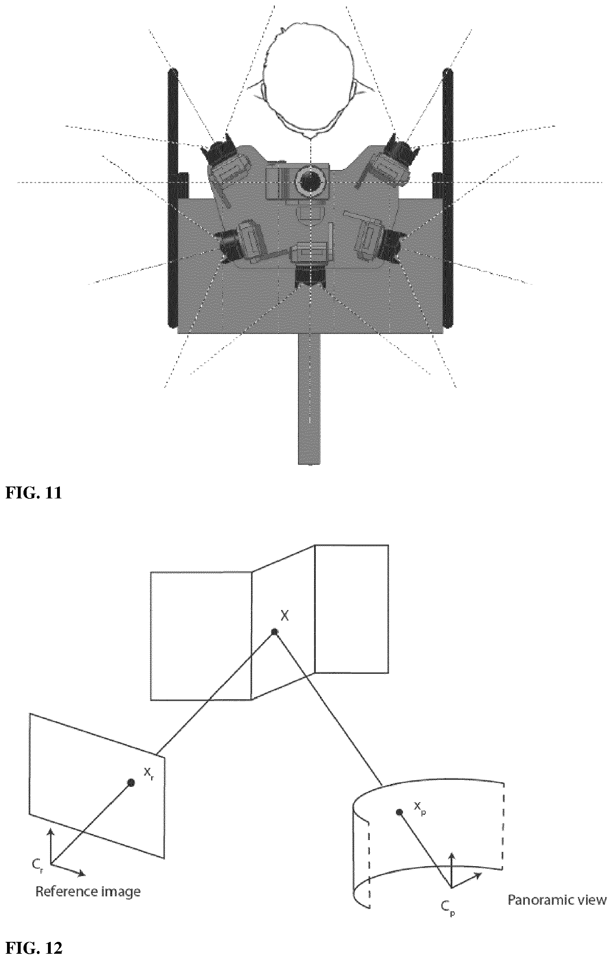

As the trolley is moved through the environment to be mapped, the cameras record images which may be used to form a 360-degree panoramic image, while the laser scanners record the horizontal and vertical dimensions of the corridor. At least two of the cameras mounted on the trolley are mounted in close proximity to one another on the device and face in the direction of the operator of the trolley. Thus, both of these cameras comprise fields of view in the direction of the operator. Through either spacing these two cameras further apart from one another, or rotating them in opposite directions from one another, the cameras are arranged to form a blind spot of sufficient area to hide the operator of the trolley as clearly illustrated in Figures 9 and 11.

The images taken by each camera to form the panorama image are taken either simultaneously or consecutively. After the images of the environment have been recorded by the cameras, they are processed using 3D geometry data associated with the environment to adjust parallax error in the images.

In the following a specific example for removing the parallax effect when knowledge about the 3D geometry is available in the form of 3D point clouds is provided in accordance with this preferred implementation of the present invention. This approach is also known as point-based rendering and is a natural choice for geometry acquisition methods like the ones employed on the mobile mapping system of the present invention, i.e., laser scanners, stereo reconstruction or structure from motion techniques. In point-based rendering, the images recorded by the cameras mounted on the mobile mapping systems are mapped onto the panoramic view using some form of geometry, e.g., depth map, 3D polygon mesh (explicit geometry) or correspondences between views.

In this example a 3D polygon mesh is employed, which can be viewed as an approximation of the real surface that has been sampled (3D points) by the laser scanners of the mobile mapping system. To obtain this approximation a polygon mesh is fitted into the 3D point cloud by minimizing the distance between the mesh and each recorded 3D point. This process is subject to a constraint that ensures that the mesh results in a smooth surface. Based on this polygon mesh-based representation of the 3D geometry captured by the laser scanners of the mobile mapping system, a relationship between the pixels in the reference views and the pixels in the panoramic view can now be defined. As a first step the ray for a pixel $x_p$ in the panoramic view is traced from the target view onto the 3D geometry, i.e., the polygon mesh, as illustrated in Figure 12. This depth computation can be processed very efficiently, for example, via rendering engines like OpenGL. The resulting 3D point X is subsequently projected into the reference camera frames to determine the corresponding coordinates in the reference image $x_r$. The resulting mapping can be written as

$$X = C_p + \rho_p P_p^{-1}(x_p) \qquad (1)$$

$$x_r = P_r(X - C_r) \qquad (2)$$

wherein, $x_p$ and $x_r$ are coordinates of the projection of 3D point X on the panoramic view and reference images, respectively. C and P correspond to the camera center and projection function. $\rho_p$ is the length of the ray between the center of the panoramic view and the 3D point $x$, i.e., the depth. Thus, for every pixel $x_p$ in the panoramic view, the corresponding coordinates in the reference view(s) $x_r$ can be determined via this mapping. The coordinates $x_r$, however, are almost always at subpixel location. Hence, to assign the right intensity or color value to the pixel in the panoramic view and to avoid aliasing effects, the value is typically computed by a weighted average of the neighboring pixels at the coordinate $x_r$. Further, since the field of view of the cameras mounted on the mobile mapping system are overlapping each other, it can happen that the same 3D point is visible in two or more cameras. The most straightforward approach and preferred implementation in accordance with the present invention is to use the average value of the respective intensity or color values, but the skilled person with appreciate that more sophisticated approaches exist to blend the contributions of overlapping reference views and which may also be implemented with the present invention.

After processing every pixel in the panoramic view in the above-described exemplary manner, a full 360-degree panorama without parallax effect is obtained. Hence, in contrast to the endeavors of building panoramic cameras as compact as possible, the present invention follows the counterintuitive approach of increasing the distance between the fields of view of the two cameras facing in the direction of the operator, in order to hide the operator of the mobile mapping device in the blind spot formed thereby.

In summary, the invention enables facilitated continuous generation of 360-degree panoramic imagery without the operator in the field of view, thereby advantageously reducing the amount of time needed to map a given environment by exploiting the information about the surrounding 3D geometry.

The invention as described herein may be better understood by way of the following examples:

According to a first example, . a method of mapping an environment is defined, the method comprising:

generating panorama images of the environment using a mobile mapping device comprising at least two cameras mounted in close proximity to one another on the device, wherein two of the cameras comprise fields of view in the direction of the operator of the mobile mapping device and are arranged to form a blind spot for accommodating the operator;

using 3D geometry data associated with the environment to adjust parallax error in images generated by said cameras.

Example 2 includes the method of example 1, wherein the environment is an indoor environment, for example the inside of a building, and/or wherein the mobile mapping device is manually operated.

Example 3 includes the method of examples 1 or 2 wherein the device comprises more than two cameras and the blind spot is formed by arranging the two cameras comprising fields of view in the direction of the operator at a greater distance from one another than the other cameras of the plurality of cameras.

Example 4 includes the method of any of the preceding examples, wherein the device comprises more than two cameras and the blind spot is formed by rotating the cameras to increase the distance between the point of overlap of the fields of view and the mapping device.

Example 5 includes the method of any of the preceding examples, wherein the 3D geometry data is generated by determining corresponding pixels of images generated by at least one of the cameras.

Example 6 includes the method of example 5, wherein the images used to generate the 3D geometry data are generated by at least two of the cameras simultaneously.

Example 7 includes the method of example 5, wherein the images used to generate the 3D geometry data are generated consecutively by at least one of the cameras.

Example 8 includes the method of any of the preceding examples, wherein the 3D geometry data is generated by using at least one scanning means to scan the environment along multiple planes.

Example 9 includes the method of example 8,wherein the scanning means comprises at least one of a laser scanner, a light-field camera and a time-of-flight camera.

Example 10 includes the method of any of the preceding examples, wherein the step of generating the panorama images is conducted continuously.

According to example 11, an apparatus for mapping an environment using a mobile mapping device is defined, the apparatus comprising:

at least two cameras operable to generate panorama images of the environment, wherein said cameras are mounted in close proximity to one another and mountable on the mobile mapping device, wherein two of the cameras comprise fields of view in the direction of the operator of the mobile mapping device and are arranged to form a blind spot for accommodating the operator;

means for using 3D geometry data associated with the environment to adjust parallax error in images generated by said two cameras.

Example 12 includes the apparatus of example 11, wherein the device comprises more than two cameras and the two cameras comprising fields of view in the direction of the operator are arranged at a greater distance from one another than the distance between other cameras of the plurality of cameras.

Example 13 includes the apparatus of example 11, wherein the device comprises more than two cameras and the two cameras comprising fields of view in the direction of the operator are rotated in opposing directions to one another to provide an increased distance between the point of overlap of the fields of view and the mapping device.

Example 14 includes the apparatus of any of examples 11 to 13, further comprising:
means operable to obtain the 3D geometry data by determining corresponding pixels of images generated by at least one of the cameras.

Example 15 includes the apparatus of any of examples 11 to 13, further comprising a plurality of laser scanners to scan the environment along multiple planes and operable to obtain the 3D geometry data.

Example 16 A method of generating panorama images of an environment using a mobile mapping device comprising at least two cameras mounted in close proximity to one another on the device; the method comprising:

taking images with the cameras simultaneously or consecutively;
using a simultaneous localization and mapping (SLAM) algorithm to allow for positioning of the mobile mapping device in the environment;
location-tagging and storing the images in a database;
registering all images to one another dependent on a location;
generating 3D geometry data by determining corresponding pixels of the images generated by at least one of the cameras; and
using the 3D geometry data associated with the environment to adjust errors in the panorama images.

Example 17 The method of example 16, wherein the environment is an indoor environment.

Example 18 The method examples 16 or 17, wherein generating the panorama images comprises point-based rendering employing a 3D polygon mesh.

Example 19 The method of example 18, further comprising using a constraint that ensures that the mesh results in a smooth surface.

Example 20 The method of any of the preceding examples, further comprising using blending contributions of overlapping images to adjust the errors in the panorama images.

Example 21 A mobile mapping device for generating panorama images of an environment, the device comprising at least two cameras mounted in close proximity to one another on the device, wherein the cameras are configured to take images simultaneously or consecutively, wherein the mobile mapping device is configured to:

use a simultaneous localization and mapping (SLAM) algorithm to allow for positioning of the mobile mapping device in the environment;
location-tag and store the images in a database;
register all images to one another dependent on a location;
generate 3D geometry data by determining corresponding pixels of the images generated by at least one of the cameras; and
use the 3D geometry data associated with the environment to adjust errors in the panorama images.

**Claims**

1. A method of mapping an environment using a mobile mapping system comprising at least two cameras arranged at a distance from one another to have overlapping fields of view and a blind spot therebetween; the method comprising:

taking images with the cameras simultaneously or consecutively,
using a simultaneous localization and mapping (SLAM) algorithm to allow for positioning of the mobile mapping device in the environment,
location-tagging and storing the images in a database,
registering all images to one another dependent on the location, and
generating 3D geometry data by determining corresponding pixels of the images generated by at least one of the cameras.

2. The method of claim 1, further comprising:

mapping the images onto a panoramic view using 3D geometry data associated with the environment.

3. The method of claim 2, wherein pixels of the images are mapped to pixels of the panoramic view by projecting 3D points of the 3D geometry data onto the images and the panoramic view, respectively.

4. The method of claim 2 or 3, wherein the 3D geometry data is generated by determining corresponding pixels of images generated by at least one of the cameras.

5. The method of claim 4 wherein the images used to generate the 3D geometry data are generated by the at least two of the cameras taking images simultaneously, or by at least one of the cameras taking images consecutively.

6. The method of any of claims 2 to 5, wherein the 3D geometry data is generated by using at least one scanning means, for example a laser scanner, a light-field camera or a time-of-flight camera, to scan the environment along multiple planes.

7. The method of any of claims 2 to 6, further comprising:
   using the 3D geometry data associated with the environment to adjust errors, in particular parallax errors, in the panorama view.

8. The method of any of claims 2 to 7, further comprising:
   using point-based rendering employing a 3D polygon mesh to generate the panoramic view.

9. A mobile mapping system configured to perform the method of any preceding claim.

FIG. 1

FIG. 2

FIG. 3

FIG. 4

FIG. 5

**FIG. 6**

**FIG. 7**

EP 3 958 214 A1

FIG. 8

FIG. 9

13

FIG. 10

**FIG. 11**

**FIG. 12**

Europäisches
Patentamt

European
Patent Office

Office européen
des brevets

# EUROPEAN SEARCH REPORT

Application Number

**EP 21 20 2258**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRAUB J ET AL: "Fast relocalization for visual odometry using binary features", 2013 IEEE INTERNATIONAL CONFERENCE ON IMAGE PROCESSING, IEEE, 15 September 2013 (2013-09-15), pages 2548-2552, XP032966136, DOI: 10.1109/ICIP.2013.6738525 [retrieved on 2014-02-11] * the whole document * | 1-9 | INV. G06T7/55 |
| L | HUITL R ET AL: "TUMindoor: An extensive image and point cloud dataset for visual indoor localization and mapping", IMAGE PROCESSING (ICIP), 2012 19TH IEEE INTERNATIONAL CONFERENCE ON, IEEE, 30 September 2012 (2012-09-30), pages 1773-1776, XP032333530, DOI: 10.1109/ICIP.2012.6467224 ISBN: 978-1-4673-2534-9 * the whole document * | 1-9 | |
| L | GEORG KLEIN ET AL: "Parallel Tracking and Mapping for Small AR Workspaces", MIXED AND AUGMENTED REALITY, 2007. ISMAR 2007. 6TH IEEE AND ACM INTERNATIONAL SYMPOSIUM ON, IEEE, PISCATAWAY, NJ, USA, 13 November 2007 (2007-11-13), pages 1-10, XP058089591, DOI: 10.1109/ISMAR.2007.4538852 ISBN: 978-1-4244-1749-0 * the whole document * | 1-9 | TECHNICAL FIELDS SEARCHED (IPC) G06T |

The present search report has been drawn up for all claims

| Place of search | Date of completion of the search | Examiner |
|---|---|---|
| Munich | 14 January 2022 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)